# EUROPÄISCHE PATENTSCHRIFT

(11) **EP 2 576 179 B1**
(45) Veröffentlichungstag und Bekanntmachung des Hinweises auf die Patenterteilung: **19.10.2016**
(21) Anmeldenummer: 11733565.3
(22) Anmeldetag: 07.06.2011
(51) Int. Cl.: B29C 45/56, B29C 45/76, G01F 1/66, G01N 29/14

(54) **VERFAHREN UND VORRICHTUNG ZUR ÜBERWACHUNG UND OPTIMIERUNG VON SPRITZGIESSPROZESSEN**
PROCESS AND DEVICE FOR CONTROLING AND OPTIMISING OF INJECTION MOULDUNG
PROCÉDÉ ET DISPOSOTIF POUR CONTROLER ET OPTIMISER LE MOULAGE PAR INJECTION

(30) Priorität: 07.06.2010 DE 202010007655 U
(43) Veröffentlichungstag der Anmeldung: 10.04.2013
(73) Patentinhaber: Seuthe, Ulrich, 58300 Wetter (DE)
(72) Erfinder: Seuthe, Ulrich, 58300 Wetter (DE)
(74) Vertreter: Grosse Schumacher Knauer von Hirschhausen
(86) Internationale Anmeldenummer: PCT/EP2011/002786
(87) Internationale Veröffentlichungsnummer: WO 2011/154123

(56) Entgegenhaltungen:
- EP-A1- 0 737 560
- EP-A2- 2 317 308
- WO-A1-89/05974
- WO-A1-93/04839
- WO-A1-2005/111598
- WO-A1-2009/135719
- WO-A1-2010/094809
- WO-A2-03/036289
- DE-A1-102008 047 002
- DE-B3-102006 033 421
- JP-A- 2002 273 773
- US-A1- 2004 139 810
- US-A1- 2010 057 237

## Beschreibung

### Gebiet der Erfindung

Die Erfindung betrifft ein Verfahren und eine Vorrichtung zur Überwachung und Optimierung von Spritzgießprozessen auf Basis einer Analyse des vor, während und/oder nach dem Spritzgießen eines Bauteils entstehenden Schwingungsspektrums.

### Hintergrund der Erfindung

Beim Spritzgießen werden flüssige Materialien in spezielle Formen gepresst, nach dem Füllvorgang abgekühlt und anschließend entnommen.

Dabei ist der gesamte Vorgang durch unterschiedliche dem jeweiligen Spritzgussmaterial, der Form sowie der Spritzgussmethode zugeordnete Zustände von Druck, Temperatur, Reibungen, Aggregatzuständen und dergleichen geprägt.

In der Regel muss das Spritzgussmaterial erwärmt und dann unter hohem Druck, z.B. bis zu 100 bar, in mehr oder weniger komplexe Formen gepresst werden, wobei das flüssige Material durch Kanäle unterschiedlicher Volumina hindurchströmt, an den Wandungen abkühlt bzw. anhaftet, sich an Engstellen staut und Richtungsänderungen aufgezwungen bekommt.

Am Ende des ursprünglichen Füllvorganges wird durch so genanntes Nachdrücken das beim Abkühlen schrumpfende Volumen des Füllmaterials durch zusätzliches Material aufgefüllt um eine vollständige Befüllung der Form zu gewährleisten.

Das formgebende Werkzeug muss die zugehörigen Kräfte aufnehmen, für die richtige Wärmeabfuhr sorgen und das Spritzgussmaterial am Ende wieder auswerfen.

Weitere Anlagenelemente bereiten das Spritzgussmaterial termisch und drucktechnisch auf den Spritzguss vor.

Durch verschiedene Prozeßvariationen kann es zu Fehlern bzw. Mängeln bei der Herstellung des Spritzgussteils kommen.

### Es ist zum Beispiel möglich, dass

- die Form nicht vollständig gefüllt wird,
- ein herausragendes Element der Form bricht,
- unterschiedliche Abkühlgeschwindigkeiten zu Spannungen im Spritzgussteil führen,
- Unterbrechungen im Kühlkreislauf das Temperaturprofil beim Abkühlen verfälschen,
- das Spritzgussteil von fehlerhaften Auswerfern beschädigt wird,
- die Materialbereitstellung bzw. Aufbereitung fehlerhaft ist,
- die Temperatur und damit die Viskosität abweichen und zu diversen Füll- und Abkühlfehler führen,
- explosionsartiges Verhalten unter Druck zu Füllfehlern und Verbrennungen führt.

Die vorgenannten und weiteren Fehler sind nur schwer identifizierbar. So muss anhand eines fehlerhaften Spritzgussteils die Ursache des Fehlers durch technische Überlegungen und Tests ermittelt werden. Häufig sind fehlerhafte Spritzgussteile auch nicht ohne weiteres als solche erkennbar, so dass große Mengen an Ausschuss produziert werden können, bevor der Fehler erkannt wird und anschließend durch versuchsweise Parameteränderungen der Prozess optimiert werden kann.

Zudem können Spritzgußwerkzeuge einen Wert von mehreren hundertausend Euro erreichen. Die Überwachung ihrer ordnungsgemäßen Funktion sowie die zeitgerechte Einleitung von Wartungsarbeiten sind demgemäß von hohem wirtschaftlichen Interesse.

Aus der WO2010/051954 ist ein schallbasiertes Verfahren zur Bauteilprüfung bekannt. Allerdings ist der Anwendungsbereich auf feste Bauteile und deren Bearbeitung durch Zerspanen, Umformen etc. beschränkt.

Die WO 03/036289 A2 beschreibt ein Verfahren und eine Vorrichtung zur Überprüfung des Innenraums eines Werkstücks auf vorhandene Fremdkörper, bei dem eine Gasströmung im Innenraum des Werkstücks erzeugt, das durch die Gasströmung erzeugte Geräusch erfasst, ein Messwert aus dem Geräusch abgeleitet, und der aus dem Geräusch abgeleitete Messwert mit einem Sollwert verglichen wird.

Aus der DE 10 2008 047 002 A1 ist es bekannt, während der Verarbeitung von Polymerwerkstoffen Schall zu messen und die Schallmessung auszuwerten.

Aus der DE 10 2006 033 421 B3 sind ein Sensor zur Verwendung bei einer kunststoffverarbeitenden Maschine sowie ein Verfahren zum Betrieb eines solchen Sensors bekannt, wobei der Sensor auf der Antriebsseite der Maschine angeordnet ist.

Die US 2004/139810 A1 betrifft eine Überwachungsvorrichtung für eine Spritzgussmaschine, bei der einzelne Kennwerte wie etwa der Einspritzdruck, die Einspritzgeschwindigkeit, die Temperatur usw. diskret während des Betriebs aufgenommen und über die Anzahl der Zyklen grafisch dargestellt werden.

Gleiches gilt für die JP 2002/273773 A, bei der ebenfalls Prozessparameter wie z. B. Druck, Vorschubgeschwindigkeit etc. aufgenommen und grafisch dargestellt werden.

Die WO 2005/111598 A1 betrifft eine Vorrichtung und ein Verfahren zur Beurteilung einer Güteklasse eines zu prüfenden Objekts nach dessen Herstellung mittels eines Prüfsignals.

Aus der WO 2010/135719 A1 sind ein Verfahren und eine Vorrichtung zur Klassifikation von schallerzeugenden Prozessen bekannt, wobei zur Bestimmung der Rotationseigenschaft eines Eisenbahnrads ("ist das Rad rund oder hat es einen Schlag?") eine Einzelspektralanalyse durchgeführt wird.

Die WO 2010/094809 A1 betrifft die akustische Beobachtung von Fluiden und Festkörpern in Rohren, beispielsweise die akustische Erkennung und Messung von Sand und Festkörpern in Öl/Gas/Wasserströmungen.

Die EP 2 317 308 A2 betrifft eine Vorrichtung und ein Verfahren zum Überprüfen eines Bauteils auf Schäden nach der Herstellung des Bauteils, nicht jedoch die Überwachung und/oder Optimierung eines Spritzgießprozesses.

Schließlich betrifft die EP 0 737 560 A1 eine statistische Darstellung von Prozessdaten, wobei Signifikanzen gesucht werden, die den überwachten Prozess beschreiben.

### Zusammenfassung der Erfindung

Ausgehend hiervon liegt der Erfindung die Aufgabe zugrunde, ein Verfahren und eine Vorrichtung zur Überwachung und Optimierung von Spritzgussprozessen zu schaffen, mit denen eine präzise Überwachung und/oder Beurteilung eines Spritzgussprozesses ermöglicht wird.

Diese Aufgabe wird entsprechend den Merkmalen des Anspruchs 1 bzw. 9 gelöst.

Demnach werden Körperschallsensoren mit der Spritzgussform bzw. mit der Befüllapparatur direkt oder indirekt verbunden bzw. gekoppelt und die durch den Spritzgießvorgang in der Form bzw. dem Apparat sowie die durch die Werkzeugbewegung beim Schließen, Öffnen und Auswerfen erzeugten Schwingungen werden gemessen.

Diese Schwingungen, insbesondere im Frequenzbereich bis 200 kHz, lassen Rückschlüsse auf den momentan ablaufenden Prozess und seine Eigenheiten zu.

Es werden Referenzmodelle bezogen auf Werkzeug, Material und weitere Prozesseigenschaften auf der Basis einer vollständigen Prozessmessung hinterlegt um als Vergleich für künftige Prozessabläufe zu dienen. Jede Signalabweichung kann aus technologischer Sicht einer Prozessveränderung zugeordnet werden und zur Überwachung bzw. Regelung des Prozesses genutzt werden.

Einflüsse durch Besonderheiten oder Veränderungen der Werkzeuge oder der Maschinenelemente bzw. der Steuerung und der beteiligten Betriebsmittel schlagen sich im Schwingungsmuster des Körperschalls nieder.

Die Schwingungen im Festkörper, insbesondere im Werkzeug (z.B. Spritzgießform) werden durch Körperschallsensoren an Oberflächen des Werkzeuges oder im Werkzeug abgegriffen. Ggf. kann ein weiterer Sensor vorgesehen sein, um beispielsweise eine Materialzuführvorrichtung wie etwa eine Einspritzeinrichtung, eine Schnecke oder einen Extruder direkt zu überwachen. Ein separater Sensor kann auch an einer Kühlvorrichtung für die Form vorgesehen sein. Kostengünstig und einfach an bestehenden Vorrichtungen wie Spritzgießformen nachrüstbar sind Sensoren an den jeweiligen Außenflächen. Dort können sie angeschraubt, verklebt, angepresst usw. werden. Wird ein Sensor an einer Innenfläche, also an einer dem Hohlraum zugewandten Fläche, angeordnet, kann er Schwingungen besser aufnehmen. So entfällt die Dämpfung durch das Material der Form. Dies kann Schwingungen hörbar machen, die bei Anordnung des Sensors an einer Außenfläche der Form nicht messbar sind. Der Signalstörabstand kann um eine Größenordnung steigen. Ein Sensor, der an der Innenfläche der Form angeordnet ist, kann die Strömung des Materials in der Form sowie andere Eigenschaften wie etwa das Abkühlverhalten beeinflussen. Um diese Einflüsse zu minimieren, kann ein Sensor für die Innenfläche der Form in die Innenfläche vollständig oder zumindest teilweise eingesetzt sein. Hierzu kann eine Ausnehmung wie etwa eine Bohrung für den Sensor vorgesehen sein. Der Sensor kann bündig mit der Innenfläche abschließen oder von einer Schicht von zweckmäßigerweise ohnehin zu verwendendem Dicht-oder Befestigungsmaterial wie etwa Harz bedeckt sein. Eine derartige Einbettung des Sensors kann auch an der Außenseite der Form erfolgen, wobei dann eine sich von außen in die Form hinein erstreckende Ausnehmung vorzusehen ist, in die der Sensor einsetzbar ist. Je tiefer die Ausnehmung, desto näher kann der Sensor an die Strömungs- und/oder Abkühlvorgänge usw. im Inneren der Form herangebracht werden.

Auch können bereits an oder in Formen zur Druckprüfung oder dergleichen vorgesehene Sensoren, die ein Piezoelement umfassen, für die Aufnahme des Schwingungsspektrums verwendet werden.

Die Schwingungen werden hochfrequent abgetastet und digitalisiert und dann im Frequenzbereich dargestellt und analysiert.

Die Frequenzdarstellung erfolgt auf der Basis vieler aufeinander folgender Kurzzeit Frequenztransformationen, die den zeitlichen Verlauf der Frequenzgänge und Intensitäten der Schwingungen darstellen. Damit wird es möglich, verschiedene Schallquellen aufgrund ihres Frequenzganges, ihrer zeitlichen Position und ihrer speziellen Dynamik zu identifizieren.

Die frequenztransformierten Abtastwerte werden zu diesem Zweck in ein Höhenprofil projiziert, das durch die Koordinaten Zeit, Frequenz und Schallintensität aufgespannt wird.

Des weiteren kann der Zustand der Werkzeuge aufgrund ihrer Schallemissionen sowohl im Betriebszustand wie auch durch speziell zu Testzwecken durchgeführte Bewegungs- und Druckzustände ermittelt werden.

Sowohl Verschleiß als auch Beschädigungen schlagen sich z.T. in veränderten Arbeitsgeräuschen nieder, die Aufschluss darüber geben können ob das Werkzeug gewartet werden muss oder noch eine Menge von Arbeitszyklen durchlaufen kann.

Zu diesem Zweck wird das Werkzeug (z.B. Spritzgießform) entweder ständig oder nur temporär zu Testzwecken mit Körperschallsensoren bestückt.

Im Neu- bzw. Gutzustand wird ein Referenzmodell der Bewegungs- und Prozessgeräusche des Werkzeuges aufgenommen. Alle folgenden Messungen werden mit diesem Referenzmodell verglichen und eine Quantifizierung des Verschleißgrades aufgrund der abweichenden Körperschallemissionen vorgenommen.

Wichtig ist hier eine hinreichende Auflösung des dynamischen Arbeitsablaufes in der Zeit, der Frequenz und der Intensität der Körperschallsignale zu erreichen, um eine Zuordnung des Bewegungsablaufes zu einzelnen Werkzeugelementen zu ermöglichen.

Die erfindungsgemäße Erfassung des Schwingungsspektrums zu verschiedenen Zeiten und vorzugsweise kontinuierlich oder quasi-kontinuierlich mit einer zweckmäßigen Sample-Rate erlaubt eine mehrdimensionale Datenauswertung, die Grundlage für eine präzise Beurteilung eines Bauteils, Werkstückes, Werkzeugs und/oder einer Bearbeitung ist.

Die mehrdimensionale Datenauswertung kann für eine bevorzugte Ausführungsform mit drei Dimensionen beispielhaft durch eine Landschaft illustriert werden, die sich dann im z.B. durch eine Frequenz-, eine Zeit- und eine Amplitudenachse aufgespannten Raum erstrecken kann. Die Landschaft visualisiert die Schallemissionen im zeitlichen Verlauf und weist dabei charakteristische Merkmale auf, die jeweils quasi einen Fingerabdruck bilden. Diese charakteristischen Merkmale sind mit geeigneten Methoden feststellbar. Ebenso sind Abweichungen von diesen charakteristischen Merkmalen feststellbar. Auch sind für bestimmte Fehler oder Fehlertypen charakteristische Merkmale in den mehrdimensionalen Daten feststellbar. Insgesamt kann auf Grundlage der mehrdimensionalen Daten, die in der bevorzugten Ausführungsform eine Landschaft im Frequenz-Zeit-Amplituden-Raum bilden, mit hoher Zuverlässigkeit die Qualität eines Spritzgussprozesses insbesondere noch während des Spritzgießens in Echtzeit festgestellt werden. Auch kann der Verschleißgrad des Werkzeugs oder ein Werkzeugfehler wie etwa ein Bruch anhand der entsprechenden charakteristischen Merkmale festgestellt und identifiziert werden. Schließlich kann die Abweichung von erwarteten charakteristischen Merkmalen festgestellt werden und die Übereinstimmung mit Fehlercharakteristiken kann einen bestimmten Fehler oder Fehlertyp diagnostizieren.

Vorzugsweise wird die Auswertung automatisiert auf Basis einer Mustererkennung durchgeführt. Für die mehr- und insbesondere dreidimensionale Mustererkennung können geeignete Algorithmen verwendet werden, die schnell und zuverlässig und mit einstellbaren Erkennungsparametem computerbasiert realisierbar sind und auf gespeicherte Schwingungsspektrum-Daten zugreifen oder die Schwingungsspektrum-Daten in Echtzeit verarbeiten.

Eine Musterdatenbank mit für eine bestimmte Anwendung geeigneten Mustern ist zweckmäßigerweise vorgesehen. Die Muster können dabei in Form von Musterlandschaftsabschnitten ggf. mit Toleranzbereichen gespeichert und/oder durch Funktionen definiert sein.

Für eine automatisierte Bewertung ist es vorzugsweise vorgesehen, eine Umhüllende des erfassten Schwingungsspektrums oder von Abschnitten davon zu bilden und mit einer Vergleichsumhüllenden zu vergleichen. Die Umhüllende wird dabei beispielsweise über eine Glättfunktion, aus Mittelung im Raum benachbarter Datenpunkte oder unter Verwendung zweckmäßiger Verfahren zum Glätten mehrdimensionaler Daten gebildet. Die Abweichung zwischen der Umhüllenden und der Vergleichsumhüllenden kann als Maßstab für eine Beurteilung eines Bauteils, Werkstücks, Werkzeugs und/oder Prozesses, z.B. der Qualität eines Spritzgießprozesses, herangezogen werden. Zudem erlaubt es die Verwendung einer Umhüllenden, Prozessabschnitte wie etwa einen Strömungsabriss, Auswerferfehler, Druckschwankungen oder dergleichen automatisiert zu identifizieren. Zudem wird die Mustererkennung durch Verwendung einer Umhüllenden vereinfacht und die Erkennungsrate wird verbessert.

Das Schwingungsspektrum zum Überwachen von Strömungsprozessen, insbesondere beim Spritzgießen, wird vorzugsweise bis zu 200 kHz und/oder breitbandig erfasst und ausgewertet.

Das erfasste Schwingungsspektrum wird vorzugsweise einer Frequenz-Zeit-Analyse unterworfen. Durch die Frequenz-Zeit-Analyse können einerseits über die Zeitachse die aufgenommenen Schwingungen dem Prozessverlauf zugeordnet werden und andererseits die interessierenden Schwingungen von nicht interessierenden Schwingungen wie etwa Maschinenschwingungen und Störschwingungen separiert werden, die andere Frequenzbereiche belegen. Die Auswertung kann sich daher auf den für die jeweilige Anwendung charakteristischen Bereich konzentrieren.

Das Schwingungsspektrum wird vorzugsweise mit einer Frequenzauflösung erfasst, die den strömungsbedingten und/oder thermischen Prozessen und ggf. weiteren anwendungsabhängigen Faktoren entspricht. Es hat sich gezeigt, dass Frequenzen bis 200 kHz, teilweise bis 100 kHz, hierzu völlig ausreichend sind. Zweckmäßig ist im unteren Frequenzbereich ein Limit, das laminare Strömungen des Materials erfassen kann. Die hierfür erforderliche Frequenz hängt u.a. ab von den Materialeigenschaften, dem Einspritzdruck und der Formgebung des zu durchströmenden Hohlkörpers.

Das Schwingungsspektrum kann erfasst werden mit den Koordinaten Frequenz f, Zeit t und Amplitude A. Diese Erfassung eignet sich für eine numerische Analyse im Computer, wobei die Koordinaten auch Funktionen a(f), b(t) und/oder c(A) der Frequenz f, der Zeit t bzw. der Amplitude A sein können, oder a(f, t, A), b(f, t, A) und/oder c(f, t, A), so dass ein dreidimensionales Array in einer gegebenen funktionellen Abhängigkeit zu f, t, A gespeichert ist, beispielsweise (If, mt, nA^{x}), wobei l, m, n, x beliebige Zahlen sind. Zur Illustration und/oder händischen Analyse kann das Schwingungsspektrum mit den drei Koordinaten grafisch dargestellt werden. Hierbei kann eine dreidimensionale Darstellung gewählt werden, bei der die Frequenz und die Zeit eine Ebene aufspannen und durch die Amplitude (oder eine Funktion davon) ein Höhenprofil definiert wird. Eine derartige grafische Darstellung erleichtert die Erkennung der zur Bewertung relevanten Schwingungen, z.B. können diese durch die Trennung auf der Zeitachse dem Bearbeitungsablauf zugeordnet werden und sind von Störschwingungen und dergleichen auf der Frequenzachse getrennt.

Zur Aufnahme der Schwingungen wird vorzugsweise ein Schallsensor, insbesondere ein Piezo-Schallsensor, verwendet. Derartige Schallsensoren können die erfindungsgemäß erforderlichen hohen Frequenzen verarbeiten, weisen eine große Frequenzbandbreite auf, sind kostengünstig herstellbar und wartungsfrei.

Der Sensor, insbesondere der Schallsensor, der am Werkzeug (Form) oder einem mit dem Werkzeug schwingungsgekoppelten Bauteil angeordnet sein kann, wird nach seiner Montage und vorzugsweise auch periodisch danach oder vor jeder Verwendung kalibriert. Hierdurch wird eine gleich bleibend hohe Präzision der Messung sichergestellt. Eine Kalibrierung ist insbesondere dann besonders zweckmäßig, wenn der Sensor an einem neuen Werkzeug angebracht wird oder zwecks Wartung gelöst und erneut angebracht werden muss, da sich durch die Anbringung ein anderes Kopplungsverhalten einstellen kann. Zur Kalibrierung wird erfindungsgemäß der Schallsensor mit einem bestimmten elektrischen Impuls beaufschlagt, um ein Schallsignal zu emmitieren. Anschließend wird das Echo des Schallsignals erfasst und mit einem Soll-Echo verglichen. Dadurch kann die Güte der Ankopplung des Schallsensors an das Werkstück oder Werkzeug oder Bauteil ermittelt und bei der Messung berücksichtigt werden.

Die Auswertung erfolgt vorzugsweise in Echtzeit. Dadurch entfällt die Notwendigkeit, Daten zu speichern. Eine Speicherung der Daten kann zweckmäßig sein bei sicherheitsrelevanten Bauteilen zum Nachweis der Fehlerfreiheit, oder für den Nachweis eines Fehlers. Die Daten können vollständig für den gesamten Bearbeitungsprozess oder die gesamte Überwachungsdauer eines Werkstücks oder Bauteils gespeichert werden oder nur ausschnittsweise in Zeitbereichen, in denen interessierende Merkmale erkannt worden sind.

Ein weiterer Aspekt der Erfindung betrifft die Transformation des Schwingungsspektrums, oder eines interessierenden Frequenzbereichs davon, in das hörbare Schallspektrum mittels einer geeigneten, z.B. linearen, Funktion oder Abbildung. Dies ermöglicht eine akustische Beobachtung bzw. Bewertung durch eine Person. Zweckmäßigerweise wird die akustische Beobachtung ergänzend zur mehrdimensionalen Auswertung durchgeführt, kann diese aber auch ersetzen.

In einer besonders zweckmäßigen Ausführungsform werden für Schäden typische Muster im Schwingungsspektrum erkannt. Hier kann u.a. eine Vereinfachung der Auswertung sich ergeben, die sich auf eine Fehlererkennung beschränkt.

Die Erfindung ermöglicht es auch, durch Temperaturschwankungen hervorgerufene Spannungsrisse oder allgemein Schäden durch Fremdeinwirkung zu erkennen.

Die Erfindung schafft damit Verfahren und Vorrichtungen, die eine automatisierte Überwachung, Qualitätssicherung und Optimierung von Strömungsprozessen im allgemeinen und Spritzgießprozessen im Besonderen ermöglichen.

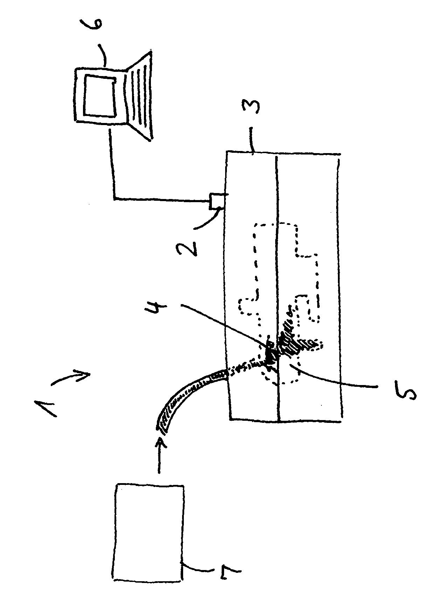

Weitere Merkmale und Ausgestaltungen der Erfindung ergeben sich aus den Ansprüchen sowie der nachfolgenden Beschreibung unter Bezugnahme auf die beigefügte Figur.

### Beschreibung der Ausführungsformen

Die Erfindung wird nachfolgend zunächst am Ausführungsbeispiel eines Spritzgießsprozesses beschrieben.

Die in Fig. dargestellte Vorrichtung 1 zur Überwachung eines Spritzgussprozesses umfasst einen Sensor 2 zum Erfassen von Schwingungen, der beispielhaft an einem Werkzeug 3 angeordnet ist, in das Kunststoff 4 zum Ausbilden eines Werkstücks 5 mit hohem Druck eingespritzt wird. Der Sensor 2 ist mit einer Auswerteinrichtung 6, z. B. einem Computer, verbunden. Das Material, hier Kunststoff 4, wird von einer Materialzuführvorrichtung 7 zugeführt, die ein Behälter, ein Extruder, eine Schnecke etc. sein kann.

Der Sensor 2 ist vorzugsweise ein Körperschallsensor, z.B. ein Piezo-Sensor, und kann bevorzugt nicht nur Körperschallsignale aufnehmen, sondern auch aussenden. Das Aussenden von Körperschallsignalen ist insbesondere für die aktive Prüfung von "leisen" Strömungsprozessen zweckmäßig, da damit Schwingungsanregungen erzeugt werden können. Andere Arten von Sensoren sind ebenfalls verwendbar, solange sie Schwingungen im interessierenden Frequenzbereich erfassen können, z.B. Bewegungssensoren.

Angekoppelt ist der Sensor 2 entweder wie beispielhaft dargestellt am Werkzeug 3 oder einem damit schwingungsgekoppelten Teil derart, dass er Schwingungen infolge des Strömungsprozesses und/oder thermischer Reaktionen erfassen kann. Im einfachsten Fall ist der Sensor festgeschraubt. Er kann auch innen in der Form 3 angeordnet oder von außen oder innen in eine entsprechende Ausnehmung eingesetzt sein. Auch kann ein Sensor verwendet werden, der eigentlich anderen Zwecken dient wie etwa der Druckmessung.

Während des Bearbeitungsvorgangs entstehen Schwingungen, die vom Sensor 2 aufgenommen werden. Hierzu ist der Sensor 2 derart ausgebildet, dass er Frequenzen zwischen einem unteren Grenzwert und einem oberen Grenzwert erfassen kann. Idealerweise ist der untere Grenzwert 0 und der obere Grenzwert 200 kHz, so dass das gesamte interessierende Spektrum aufgenommen werden kann. In der Praxis ist ein oberer Grenzwert von mindestens 50 kHz, bevorzugt mindestens 100 kHz, zweckmäßig. Frequenzen unterhalb von 10 kHz oder 50 kHz werden beim Testen von Werkzeugverschleiß in der Praxis vorzugsweise gedämpft oder abgeschnitten, da sie keinerlei verwertbare Information enthalten, so dass ein entsprechender unterer Grenzwert zweckmäßig ist. Bei Strömungsprozessen und insbesondere Spritzgießprozessen ist jedoch ein deutlich niedrigerer unterer Grenzwert wie etwa 50 Hz oder 100 Hz zweckmäßig, da auch in diesem niedrigen Frequenzbereich verwertbare charakteristische Schwingungen entstehen, möglicherweise durch laminare Strömungen. Bevorzugt ist daher ein sehr breitbandiger Frequenzbereich zwischen nahezu 0 Hz und etwa 200 kHz, da sowohl im niedrigen als auch im hohen Frequenzbereich charakteristische Schwingungen auftreten.

Die vom Sensor 2 erfassten Schwingungen werden mehrdimensional ausgewertet. Hierfür kann das erfasste Schwingungsspektrum in der Auswerteeinheit 6 zwischengespeichert werden, die vorzugsweise ein Computer mit entsprechender Schnittstelle und geeigneten Speichermedien ist.

In der Auswerteeinheit 6 kann eine Frequenz-Zeit-Analyse dergestalt erfolgen, dass das Schwingungsspektrum noch während der Erfassung oder danach grafisch dargestellt wird und/oder numerisch analysiert wird.

Eine Darstellung kann dreidimensional erfolgen mit den Koordinaten Zeit, Frequenz und Amplitude (oder maximale Amplitude oder Intensität oder dergleichen) oder illustriert zweidimensional, wobei Höhenlinien die Amplitude sichtbar machen.

Es sind Muster erkennbar, die charakteristisch für den jeweiligen Spritzgussprozess sind. Derartige Muster ergeben sich auch für Fehler. Durch Mustererkennung können folglich Prozessschritte erkannt werden, beurteilt werden, indem z.B. ein Maß für die Abweichung von einem Muster ermittelt wird, und auch Fehler erkannt und identifiziert werden, jedenfalls Abweichungen vom Normverhalten noch während das Einspritzen und danach beim Abkühlen, Aushärten und Entnehmen aus der Form erkannt werden.

An oder in der Materialzuführvorrichtung 7 und/oder an einer ggf. vorhandenen Kühlvorrichtung für die Form 3 kann ebenfalls ein Sensor vorgesehen sein, um die Materialzuführung bzw. die Kühlvorrichtung zu überwachen und beispielsweise einen Ausfall feststellen zu können. Umfasst eine derartige Kühlvorrichtung Kanäle im Werkzeug 3, kann in einem dieser Kanäle oder angrenzend daran oder mündend darin der Sensor 2, der dann sowohl die Kühlung als auch den Spritzgießprozess überwachen kann, oder ein zusätzlicher Sensor angeordnet werden.

## Patentansprüche

1. Verfahren zur Überwachung und/oder Optimierung von Spritzgießprozessen, wobei infolge einer Strömung eines Materials, welcher in eine Form eingespritzt wird, entstehende Schwingungen erfasst und ausgewertet werden, **dadurch gekennzeichnet, dass** ein Schwingungsspektrum (quasi-)kontinuierlich erfasst und einer mehrdimensionalen Auswertung umfassend eine Frequenz-Zeit-Analyse und eine Mustererkennung unterworfen wird.

2. Verfahren nach Anspruch 1, bei dem die Schwingungen vor, während und/oder nach dem Einspritzen von Material in eine Form erfasst werden.

3. Verfahren nach Anspruch 2, bei dem ein an einer Außenfläche der Form, an einer Innenfläche der Form und/oder ein zumindest teilweise in die Form eingesetzter Schwingungssensor verwendet wird.

4. Verfahren nach Anspruch 2 oder 3, bei dem Körperschall an der Form mit einer Frequenz bis zu 200 kHz erfasst wird.

5. Verfahren nach einem der Ansprüche 2 bis 4, bei dem ein weiterer Schallsensor an einer Materialzuführvorrichtung und/oder ein weiterer Schallsensors an einer Kühlvorrichtung für die Form verwendet werden, um wenigstens ein weiteres Schwingungsspektrum aufzunehmen und die Materialzuführung bzw. die Kühlung zu überwachen und/oder zu optimieren.

6. Verfahren nach einem der Ansprüche 1 bis 5, bei dem zu Testzwecken vorgesehene Bewegungs- und/oder Druckzustände an der Form und/oder beim Einspritzen des Materials erzeugt werden.

7. Verfahren nach einem der Ansprüche 1 bis 6, bei dem ein Schallsensor (2) mit einem Piezoelement zur Aufnahme des Schwingungsspektrum verwendet wird.

8. Verfahren nach einem der Ansprüche 1 bis 7, bei dem die Auswertung im Wesentlichen in Echtzeit erfolgt.

9. Vorrichtung (1) zur Überwachung und/oder Optimierung von Spritzgleßprozessen, **dadurch gekennzeichnet, dass** die Vorrichtung mit einem Sensor (2) zum Erfassen eines Schwingungsspektrums, das während eines Strömungsvorganges beim Einspritzen eines Materials in eine Form entsteht, koppelbar ist und eine Auswerteeinrichtung (6) zum mehrdimensionalen Auswerten des (quasi-)kontinuierlich erfassten Schwingungsspektrums vermittels Frequenz-Zelt-Analyse und Mustererkennung aufweist.

10. Vorrichtung nach Anspruch 9, **dadurch gekennzeichnet, dass** der Sensor (2) an einer Form angebracht ist, in die Material unter Druck und/oder erhöhter Temperatur einspritzbar ist.

11. Vorrichtung nach Anspruch 10, **gekennzeichnet durch** einen weiteren Schallsensor an einer Materialzuführvorrichtung wie etwa einer Schnecke oder einem Extruder und/oder **durch** einen weiteren Schallsensor an einer Kühlvorrichtung für die Form, um wenigstens ein weiteres Schwingungsspektrum aufzunehmen und die Materialzuführung bzw. die Kühlung zu überwachen und/oder zu optimieren.

12. Vorrichtung nach einem der Ansprüche 10 bis 12, **dadurch gekennzeichnet, dass** der Sensor (2) an einer Innenfläche der Form angeordnet ist.

13. Vorrichtung nach einem der Ansprüche 10 bis 13, bei der die Form Kühlelemente aufweist, in denen ein weiterer Sensor (2) angeordnet ist.

14. Vorrichtung nach einem der Ansprüche 9 bis 11, **dadurch gekennzeichnet, dass** der Sensor bzw. die Sensoren Körperschall erfassen können, der durch laminare Strömung des strömenden Materials erzeugt wird.

15. Vorrichtung nach einem der Ansprüche 9 bis 11, **dadurch gekennzeichnet, dass** der Sensor bzw, die Sensoren Körperschall mit einer Frequenz bis zu 200 kHz erfassen können.

## Claims

1. A method for monitoring and/or optimising injection moulding processes, wherein vibrations arising as a result of a flow of material, which is injected into a mould, are detected and evaluated, **characterised in that** a vibration spectrum is detected (quasi-) continuously and subjected to a multidimensional evaluation including a frequency-time analysis and a pattern recognition.

2. The method according to claim 1, wherein the vibrations are detected before, during and/or after the injection of material into the mould.

3. The method according to claim 2, wherein a vibration sensor is used on an outer surface of the mould, on an inner surface of the mould and/or a vibration sensor inserted at least partially into the mould is used.

4. The method according to claim 2 or 3, wherein structure-borne noise is detected at the mould with a frequency up to 200 kHz.

5. The method according to any one of claims 2 to 4, wherein a further acoustic sonar on a material supply device and/or a further acoustic sensor on a cooling device for the mould are used, in order to pick up at least one further vibration spectrum and to monitor and/or to optimise the material supply or the cooling.

6. The method according to any one of claims 1 to 5, wherein movement and/or pressure states provided for test purposes are generated on the mould and/or during the injection of the material.

7. The method according to any one of claims 1 to 6, wherein an acoustic sensor (2) with a piezoelement is used to pick up the vibration spectrum.

8. The method according to any one of claims 1 to 7, wherein the evaluation takes place essentially in real time.

9. A device (1) for monitoring and/or optimising injection moulding processes, **characterised in that** the device can be coupled with a sensor (2) for detecting a vibration spectrum, which arises during a flow process when the material is injected into the mould, and comprises an evaluation device (8) for the multidimensional evaluation of the (quasi-) continuously detected vibration spectrum by means of frequency-time analysis and pattern recognition.

10. The device according to claim 9, **characterised in that** the sensor (2) is fitted to a mould into which material can be injected under pressure and/or at raised temperature.

11. The device according to claim 10, **characterised by** a further acoustic sensor on a material supply device such as for example a screw and/or an extruder and/or by a further acoustic sensor on a cooling device for the mould, in order to pick up a further vibration spectrum and to monitor and/or optimise the material supply or the cooling.

12. The device according to any one of claims 10 to 12, **characterised in that** the sensor (2) is disposed on an inner surface of the mould.

13. The device according to any one of claims 10 to 13, wherein the mould comprises cooling elements, in which a further sensor (2) is disposed.

14. The device according to any one of claims 9 to 11, **characterised in that** the sensor or sensors can detect structure-borne noise which is generated by a laminar flow of the flowing material.

15. The device according to any one of claims 9 to 11, **characterised in that** the sensor or sensors can detect structure-borne noise with a frequency up to 200 kHz.

## Revendications

1. Procédé destiné à superviser et/ou à optimiser des processus de moulage par injection, des vibrations produites par un écoulement d'une matière que l'on injecte dans un moule étant détectées et évaluées, **caractérisé en ce que** qu'un spectre de vibrations est détecté de manière (quasi) continuelle et soumis à une évaluation multidimensionnelle comprenant une analyse fréquence-temps.

2. Procédé selon la revendication 1, lors duquel les vibrations sont détectées avant, pendant et/ou après l'injection de matière dans un moule.

3. Procédé selon la revendication 2, lors duquel on utilise un capteur de vibrations utilisé sur une surface extérieure du moule, sur une surface intérieure du moule et/ou au moins en partie dans le moule.

4. Procédé selon la revendication 2 ou la revendication 3, lors duquel on détecte un bruit de structure sur le moule d'une fréquence de jusqu'à 200 kHz.

5. Procédé selon l'une quelconque des revendications 2 à 4, lors duquel on utilise un capteur sonique supplémentaire sur un dispositif d'alimentation de la matière et/ou un capteur sonique supplémentaire sur un dispositif de refroidissement pour le moule, pour enregistrer au moins un spectre de vibrations supplémentaire et pour superviser et/ou pour optimiser l'alimentation de matière ou le refroidissement.

6. Procédé selon l'une quelconque des revendications 1 à 5, lors duquel, à des fins de test, on génère des états de déplacement et/ou des états de pression sur le moule et/ou lors de l'injection.

7. Procédé selon l'une quelconque des revendications 1 à 6, lors duquel on utilise un capteur sonique (2) avec un élément piézoélectrique pour enregistrer le spectre de vibrations.

8. Procédé selon l'une quelconque des revendications 1 à 7, lors duquel l'évaluation s'effectue essentiellement en temps réel.

9. Dispositif (1) destiné à superviser et/ou à optimiser des processus de moulage par injection, **caractérisé en ce que** le dispositif peut être accouplé à un capteur (2) pour détecter un spectre de vibrations produit pendant un processus d'écoulement, lors de l'injection d'une matière dans un moule et comporte un système d'évaluation (6) pour l'évaluation multidimensionnelle du spectre de vibrations détecté de manière (quasi) continuelle, au moyen d'une analyse temps-fréquence et d'une reconnaissance de modèle.

10. Dispositif selon la revendication 9, **caractérisé en ce que** le capteur (2) est monté sur un moule dans lequel la matière est injectable sous pression et/ou sous température élevée.

11. Dispositif selon la revendication 10, **caractérisé par** un capteur sonique supplémentaire sur un dispositif d'alimentation de matière, comme par exemple une vis sans fin ou une extrudeuse et/ou par un capteur sonique supplémentaire sur un dispositif de refroidissement pour le moule, pour enregistrer au moins un spectre de vibrations supplémentaire et pour superviser et/ou pour optimiser l'alimentation de matière ou le refroidissement.

12. Dispositif selon l'une quelconque des revendications 10 à 12, **caractérisé en ce que** le capteur (2) est placé sur une surface intérieure du moule.

13. Dispositif selon l'une quelconque des revendications 10 à 13, sur lequel le moule comporte des éléments de refroidissement dans lesquels est placé un capteur (2) supplémentaire.

14. Dispositif selon l'une quelconque des revendications 9 à 11, **caractérisé en ce que** le capteur ou les capteurs sont en mesure de détecter un bruit de structure qui est généré par un écoulement laminaire de la matière en circulation.

15. Dispositif selon l'une quelconque des revendications 9 à 11, **caractérisé en ce que** le capteur ou les capteurs sont en mesure de détecter un bruit de structure d'une fréquence de jusqu'à 200 kHz.
